# EUROPEAN PATENT SPECIFICATION

(11) **EP 3 492 811 B1**
(45) Date of publication and mention of the grant of the patent: **26.04.2023**
(21) Application number: 18205298.5
(22) Date of filing: 09.11.2018
(51) Int. Cl.: F22B 1/02, F22B 1/12, F22B 35/00, F22B 37/26, G21C 15/18, G21D 3/04

(54) **NUCLEAR POWER PLANTS**
KERNKRAFTWERKE
CENTRALES NUCLÉAIRES

(30) Priority: 23.11.2017 GB 201719431
(43) Date of publication of application: 05.06.2019
(73) Proprietor: Rolls-Royce SMR Limited, Derby, Derbyshire DE24 8BJ (GB)
(72) Inventor: Palmer, James, Derby, Derbyshire DE24 8BJ (GB)
(74) Representative: Mewburn Ellis LLP

(56) References cited:
- EP-A1- 0 005 898
- EP-A1- 0 353 867
- GB-A- 2 535 848
- GB-A- 2 550 352
- US-A1- 2015 117 586

## Description

### Technical Field:

The present disclosure relates to nuclear power plants.

### Background

A nuclear power plant typically includes a nuclear reactor, a primary circuit, a heat exchanger, a secondary circuit, and a turbine. The primary fluid in the primary circuit is heated by the nuclear reactor. The primary fluid flows to the heat exchanger, where it heats secondary fluid in the secondary circuit. The heated secondary fluid is then used to drive the turbine to generate electricity.

It is important that the nuclear reactor and fuel does not overheat as this could result in catastrophic failure. As such, it is necessary to provide cooling to the reactor. Generally, cooling is provided in operation by the circulation of heat in the primary fluid (or coolant) of the primary circuit, exchanging that heat with the secondary cooling system via the heat exchanger (e.g. steam generator or boiler) and then exchanging this heat with an ultimate heat sink of the power station. The ultimate heat sink may be the sea, a cooling tower, or some other alternative heat sink.

It is important that a nuclear power plant includes safety systems such that if there is a failure (e.g. no electricity) meaning that the usual cooling flow described above is not available, the reactor is prevented from overheating in its shutdown state, where the reactor will still be generating substantial heat in the form of decay heat.

GB2550352 discloses a nuclear power plant having a reservoir of coolant provided at a position closer to the reactor chamber than the ultimate heat sink; a first feed arrangement is provided and configured to cool the reactor using the coolant of the reservoir as an alternative to using the ultimate heat sink; a second feed arrangement 32 is provided and configured to flood the reactor chamber with coolant from the reservoir in the event of an emergency.

GB2535848 discloses a secondary side passive waste heat removal system, with a steam pipeline that hermetically penetrates a containment vessel and is connected to an outlet of a steam generator arranged in the containment vessel as well as a cooling water tank arranged outside the containment vessel, a water supply pipeline also hermetically penetrates the containment vessel and is connected to a cooling water tank and an inlet of the steam generator, and the steam pipeline, the water supply pipeline and the cooling water tank form a circulating channel so as to remove decay heat in the containment vessel out of the containment vessel.

### Summary

According to the invention there is provided a nuclear power plant with the technical features of claim 1.

The threshold level may be set such that, provided that the coolant stays below the threshold level, the or each or at least some of the steam separators function to dry steam within the steam generator. The threshold level may be set such that, provided that the coolant in the secondary side of the steam generator stays below the threshold level, the or each or at least some of the steam separators function to dry steam within the steam generator. The threshold level may be defined by a lower limit of the steam drying zone. The steam drying zone may be defined as the region within which steam drying occurs, or the operable range of the or each steam separator. The or each steam separator may at least partially lie within the steam drying zone.

The coolant reservoir may contain coolant such as water. The level of the coolant within the coolant reservoir may be at or below the threshold level. The coolant reservoir may be located inside a reactor containment. The coolant reservoir may circumferentially surround the steam generator, reactor arrangement or reactor containment structure.

The coolant reservoir may be provided with a valve, such as a breather valve, operable to provide fluid communication between the coolant reservoir and the outside thereof. The power plant may further comprise a depressurisation valve operable to reduce the pressure within the steam generator. The depressurisation valve may be operable to route steam to a subsidiary location. The power plant may further comprise a feed conduit between the coolant reservoir and the steam generator. The feed conduit may be provided with a valve operable to allow fluid communication between the coolant reservoir and the steam generator.

There is also disclosed a method of operating a nuclear power plant according to claim 12.

The method may further comprise opening a valve so as to provide fluid communication between the coolant reservoir and the outside thereof. The method may further comprise opening a depressurisation valve so as to reduce the pressure within the steam generator. Opening the depressurisation valve may route steam to a subsidiary location.

### Brief Description of Drawings

Embodiments of the invention will now be described, by way of example, with reference to the accompanying drawings, in which:
Figure 1 schematically shows a nuclear power plant;
Figure 2 schematically shows the reactor chamber of Figure 1; and
Figure 3 schematically shows a reactor chamber in accordance with an alternative arrangement.

### Detailed Description

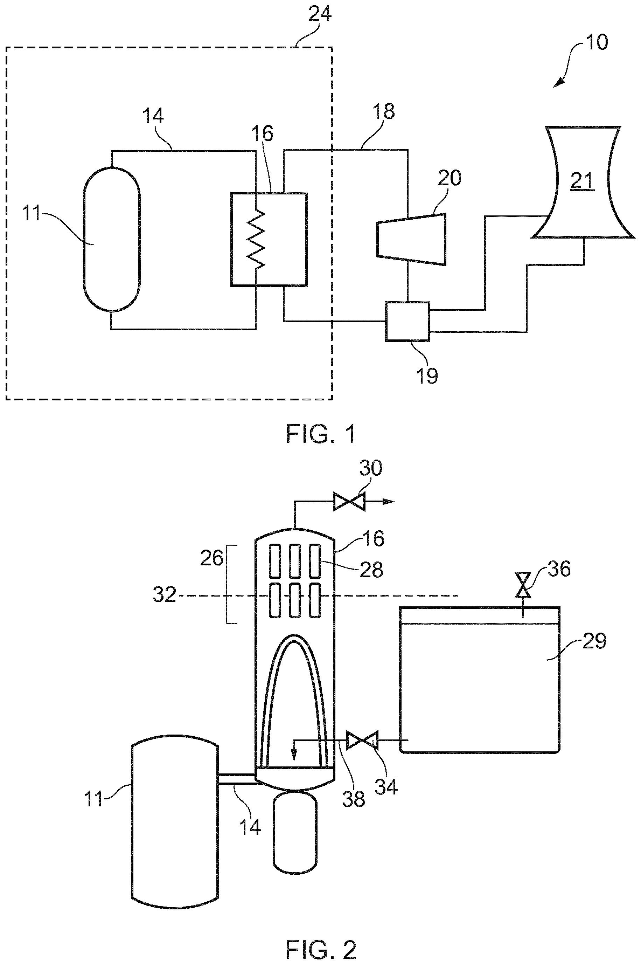

Referring to **Figure 1**, a nuclear power plant is indicated generally at 10. The plant includes a reactor pressure vessel (RPV) 11 housing nuclear fuel, a primary fluid circuit 14, a heat exchanger which in this example is a steam generator 16, a secondary fluid circuit 18 and a turbine 20. The turbine 20 is housed within a turbine hall (or building or chamber) (not shown) and the reactor vessel 11 is housed within a reactor chamber 24 (or building or hall). The reactor chamber 24 is separated from the turbine hall by a containment barrier. The barrier may be made, for example, from concrete and/or steel.

During normal operation of the nuclear power plant 10, the primary fluid in the primary circuit 14 is heated by the thermal energy generated in the reactor pressure vessel 11. The primary fluid then flows to the steam generator 16, where it heats the secondary fluid, which in this example is water, to generate steam. The generated steam is then used to drive the turbine 20, thereby generating electricity. The secondary fluid flows to a condenser 19 where it is cooled using water from an ultimate heat sink 21. The ultimate heat sink may be a cooling tower, river, lake, or any other suitable supply of cooling water. In emergency conditions, for example, if there is a power outage, the secondary circuit pumps may stop operating, meaning that the water in the secondary fluid circuit 18 will not continue to flow, causing a build-up of heat in the reactor pressure vessel 11. It is therefore desirable to provide a means for heat removal over extended periods of time from the immediate shut down state through to thermal roll-over of a plant without any intervention or power requirements.

**Figure 2** shows a part of the nuclear power plant which, as will be described in detail below, includes a local ultimate heatsink 29 for removing heat from the primary fluid circuit (and therefore from the reactor pressure vessel 11) in an emergency (e.g. during a power outage). As shown, in the present arrangement the reactor is a close-coupled reactor which means that the steam generator 16 is closely coupled to the reactor pressure vessel 11. In particular, in this arrangement the steam generator 16 is adjacent to the reactor pressure vessel 11 and is both mechanically and fluidly connected to the reactor pressure vessel 11. Although only one steam generator 16 is shown, it should be appreciated that a plurality of steam generators 16 may be provided. The entire assembly of the reactor pressure vessel 11 and the steam generator 16 is housed in the reactor chamber 24 and positioned proximal to a base of the reactor chamber 24.

As shown in Figure 2, the steam generator 16 comprises two substantially horizontal arrays of steam separators 28, one located above the other in an upper region of the steam generator 16. The steam separators 28 are configured to dry the steam generated within the steam generator 16 such that water droplets are removed from vapour, thereby generating substantially dry steam. Substantially dry steam may be considered to be steam that contains less than 5% liquid water, or less than 4% liquid water, or less than 3% liquid water, or less than 2% liquid water, or less than 1% liquid water, or less than 0.5% liquid water, or less than 0.25% liquid water. The steam separators 28 therefore ensure that substantially dry steam is fed to the turbine 20. This may be highly desirable as wet steam can damage turbines and it carries less energy than dry steam. Although two rows of steam separators 28 are shown, it should be appreciated that any suitable number of separators could be used.

The steam separators 28 define what is referred to in this specification as a steam drying zone 26 in the upper region of the steam generator 16. The steam drying zone 26 is the region of the steam generator 16 within which moisture droplets are removed from the wet steam by the steam separators 28 so as to generate substantially dry steam. The steam separators 28 are at least partly located within the steam drying zone 26.

The steam generator 16 further comprises a depressurization valve 30 which is operable to depressurize the steam generator 16. The valve 30 may be operated by a motor or solenoid system, or via a remote control system, for example. In other arrangements, the valve 30 may comprise an electro-mechanical valve which may open automatically on loss of electrical power. The depressurization valve 30 can be operated to route the steam to a subsidiary location (i.e. a location or to equipment that is not the main turbine 20. The subsidiary location may be the reactor containment, the external atmosphere, a separate tank, an ultimate heat sink, or a local ultimate heat sink (which is described below).

The nuclear power plant 10 further comprises a local ultimate heat sink (LUHS) in the form of a coolant reservoir 29. The local ultimate heat sink 29 is distinct from the ultimate heat sink 21 and is provided close (i.e. local) to the reactor pressure vessel 11. In this arrangement the coolant reservoir 29 is a water reservoir and contains a volume of water. However, it should be appreciated that other fluid coolants could be used. As will be described in detail below, the coolant reservoir 29 can be used to draw heat away from the primary fluid circuit 14 in emergency conditions. Such an emergency condition may occur where the secondary fluid circuit 18 is not capable of drawing heat away from the primary fluid circuit 14. This could be because either fluid is not circulating in the secondary fluid circuit 18, or because the ultimate heat sink 21 is not appropriately cooling the secondary fluid. Such an emergency may occur when there is a power outage. In this arrangement the coolant reservoir 29 is provided outside of the reactor chamber 24 such that there is a physical barrier (e.g. a containment barrier) between the reactor chamber 24 and the reservoir 29. However, in alternative arrangements the coolant reservoir 29 may be provided within the reactor chamber 24.

The bottom of the reservoir 29 is fluidically connected to the bottom of the steam generator 16 by a feed conduit 38. The feed conduit 38 is provided with a valve 34, for example an electromechanical valve, which under emergency conditions opens (or can be opened) such that coolant within the reservoir 29 is supplied to the steam generator 16 under gravity. The upper region of the coolant reservoir 29 is also provided with a breather valve 36 which can be opened to provide fluid communication between the coolant reservoir 29 and the atmosphere (or external environment), thereby equalising the pressure between the inside and the outside of the reservoir 29. This may assist in the flow of coolant from the reservoir 29 to the steam generator 16 in emergency conditions.

The coolant reservoir 29 is filled with coolant, which in this arrangement is water, to a fill level that ensures that when coolant is gravity-fed to the steam generator 16 (i.e. by opening valves 30, 34, 36) the coolant does not rise above a threshold level 32 defined by the steam drying zone 26. In this arrangement the threshold level 32 is at a position below the top of the steam separators 28 and above the bottom of the steam separators 28. The threshold level 32 is selected to ensure that, providing the coolant stays below the threshold level 32, the steam separators 28 appropriately function so as to dry the generated steam. This ensures that even under emergency conditions when the steam generator 16 is flooded with coolant from the reservoir 29, dry steam is generated.

In this arrangement the coolant reservoir 29 is filled to a level that is at or below the threshold level 32. This ensures that when coolant 29 is fed to the steam generator 16 under gravity the coolant 29 does not exceed the threshold level 32. However, it should be appreciated that the coolant reservoir 29 could be filled above the threshold level 32, whilst still ensuring that under emergency conditions the coolant remains below the threshold level 32. Specifically, the coolant reservoir 29 may be filled with coolant to a level above the threshold level 32 such that the volume of coolant in the coolant reservoir 29 above the threshold level 32 is no more than the volumetric capacity of the steam generator 16 below the threshold level 32. In an alternative arrangement the steam generator 16 could be provided with an overflow that, under emergency conditions, prevents coolant from rising above the threshold level 32.

In an emergency condition, for example if there is a power outage, it may no longer be possible to sufficiently cool the fluid within the primary circuit 14. This may be because it is no longer possible to pump the fluid within the secondary circuit 18 and/or because the secondary fluid may not be sufficiently cool. In such cases it is critical to ensure that the reactor pressure vessel 11 does not overheat. On detection of an emergency condition, the valves 30, 36, 38 all open. This may be automatic, or an operator may have to open the valves in response to the detection of an emergency condition. For example, one or more of the valves 30, 36, 38 may be electromechanical and configured such that in the case of a power outage the valves automatically open. Opening the depressurisation valve 30 causes the pressure within the steam generator 16 to drop, and also ensures that any steam generated is routed to a subsidiary location. Opening the breather valve 36 provides fluid communication between the coolant reservoir 29 and the atmosphere and therefore equalises the pressure. Opening the valve 34 causes the coolant (in this arrangement water) to gravity flow into the steam generator 16. The coolant, in the form of water, is turned into steam by the primary circuit 14, thereby removing heat from the primary circuit 14 and the reactor pressure vessel 11. Since the coolant remains below the threshold level 32, the steam separators 28 function appropriately to dry the steam (i.e. remove water droplets from the wet steam) such that the steam leaving the steam generator 16 is substantially dry steam.

As the steam leaving the steam generator 16 is substantially dry, more heat is removed from the steam generator 16 for the same volume of water. This may mean that less water is needed to achieve the same cooling than would be needed if the steam leaving the steam generator 16 was wet. Accordingly, it may be possible to provide a smaller coolant reservoir 29 (containing a smaller volume of water) in order to cool the reactor pressure vessel 11 for a set period of time (e.g. to thermal roll-over). Alternatively, of course, the same size reservoir 29 could be used to cool the reactor pressure vessel 11 for a longer period of time. The coolant reservoir 29 may be sized to provide the total heat sink requirements for decay heat removal over extended periods of time from the immediate shut down state through to thermal roll-over of a nuclear plant without any intervention or power requirements.

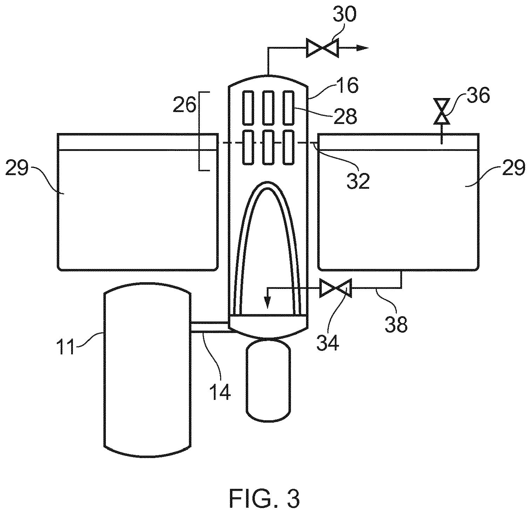

In an alternative arrangement shown in **Figure 3**, the coolant reservoir 29 may be an annular coolant reservoir 29 that circumferentially surrounds the steam generator 16, reactor plant arrangement or reactor containment structure. Such an arrangement may allow the reservoir 29 to be appropriately sized, whilst keeping the level below the threshold level 32.

In the above described arrangement there is only a single steam generator 16. However, it should be appreciated that there could be multiple steam generators 16. Each could be provided with their own coolant reservoir 29 (or LUHS), or one coolant reservoir 29 could supply multiple steam generators 16.

Although the steam generator 16 shown in a vertical steam generator, the arrangement described is equally applicable to a horizontal steam generator.

## Claims

1. A nuclear power plant (10), comprising:
a reactor pressure vessel (11);
a steam generator (16) arranged to generate steam utilising thermal energy generated within the reactor pressure vessel (11);
a fluid circuit (14) for transferring thermal energy from the reactor pressure vessel (11) to the steam generator (16); and
a coolant reservoir (29) being adapted for storing coolant for supply to the steam generator (16) under gravity in emergency conditions;
wherein the steam generator (16) comprises a steam drying zone (26) comprising one or more steam separators (28) configured to dry steam; and
wherein the steam generator (16) and coolant reservoir (29) are configured such that when coolant is supplied from the coolant reservoir (29) to the steam generator (16) in emergency conditions the coolant stays below a threshold level (32) defined by the steam drying zone (26).

2. A nuclear power plant (10) according to claim 1, wherein the threshold level is set such that, provided that the coolant stays below the threshold level, the or each steam separator functions to dry steam within the steam generator.

3. A nuclear power plant (10) according to claim 1 or 2, wherein the threshold level (32) is defined by a lower limit of the steam drying zone (26).

4. A nuclear power plant (10) according to any preceding claim, wherein the or each steam separator (28) at least partially lies within the steam drying zone (26).

5. A nuclear power plant (10) according to any preceding claim, wherein the coolant reservoir (29) is adapted to contain coolant.

6. A nuclear power plant (10) according to claim 5, wherein the level of the coolant within the coolant reservoir (29) is at or below the threshold level (32).

7. A nuclear power plant (10) according to any preceding claim, wherein the coolant reservoir (29) is located inside a reactor containment (24).

8. A nuclear power plant (10) according to any preceding claim, wherein the coolant reservoir (29) circumferentially surrounds the steam generator (16).

9. A nuclear power plant (10) according to any preceding claim, wherein the coolant reservoir (29) is provided with a valve (36) operable to provide fluid communication between the coolant reservoir (29) and the outside thereof.

10. A nuclear power plant (10) according to any preceding claim, further comprising a depressurisation valve (30) operable to reduce the pressure within the steam generator (16).

11. A nuclear power plant (10) according to claim 10, wherein the depressurisation valve (30) is operable to route steam to a subsidiary location.

12. A nuclear power plant (10) according to any preceding claim, further comprising a feed conduit (38) provided between the coolant reservoir (29) and the steam generator (16), wherein:
the feed conduit (38) is provided with a valve (34) operable to allow fluid communication between the coolant reservoir (29) and the steam generator (16) and configured to be shut during normal conditions and open under emergency conditions; and
the steam generator (16) and the coolant reservoir (29) are further configured such that at least a portion of the coolant reservoir (29) is below the threshold level (32).

13. A method of operating a nuclear power plant (10) in accordance with any preceding claim, the method comprising supplying coolant from the coolant reservoir (29) to the steam generator (16) under gravity, the coolant remaining below the threshold level (32) defined by the steam drying zone (26).

14. A method according to claim 13, further comprising opening a valve (36) so as to provide fluid communication between the coolant reservoir (29) and the outside thereof.

15. A method according to claim 13 or 14, further comprising opening a depressurisation valve (30) so as to reduce the pressure within the steam generator (16).

16. A method according to claim 15, wherein opening the depressurisation valve (30) routes steam to a subsidiary location.

## Patentansprüche

1. Kernkraftwerk (10), Folgendes umfassend:
einen Reaktordruckbehälter (11);
einen Dampfgenerator (16), der angeordnet ist, um unter Verwendung von innerhalb des Reaktordruckbehälters (11) erzeugter Wärmeenergie Dampf zu erzeugen;
einen Fluidkreislauf (14) zum Übertragen von Wärmeenergie von dem Reaktordruckbehälter (11) zu dem Dampfgenerator (16);
und ein Kühlmittelreservoir (29), das geeignet ist, um in Notsituationen Kühlmittel zur Zufuhr zu dem Dampfgenerator (16) unter Schwerkraft zu lagern;
wobei der Dampfgenerator (16) eine Dampftrocknungszone (26) umfasst, die einen oder mehrere zur Trocknung von Dampf ausgelegte(n) Dampfabscheider (28) umfasst; und
wobei der Dampfgenerator (16) und das Kühlmittelreservoir (29) derart ausgelegt sind, dass das Kühlmittel, wenn es in Notsituationen von dem Kühlmittelreservoir (29) zu dem Dampfgenerator (16) zugeführt wird, unter einem durch die Dampftrocknungszone (26) definierten Schwellenniveaus (32) bleibt.

2. Kernkraftwerk (10) nach Anspruch 1, wobei das Schwellenniveau derart eingestellt ist, dass, sofern das Kühlmittel unter dem Schwellenniveau bleibt, der bzw. jeder Dampfabscheider dem Trocknen von Dampf innerhalb des Dampfgenerators dient.

3. Kernkraftwerk (10) nach Anspruch 1 oder 2, wobei das Schwellenniveau (32) durch eine Untergrenze der Dampftrocknungszone (26) definiert ist.

4. Kernkraftwerk (10) nach einem der vorangegangenen Ansprüche, wobei der bzw. jeder Dampfabscheider (28) zumindest teilweise innerhalb der Dampftrocknungszone (26) liegt.

5. Kernkraftwerk (10) nach einem der vorangegangenen Ansprüche, wobei das Kühlmittelreservoir (29) geeignet ist, um Kühlmittel zu enthalten.

6. Kernkraftwerk (10) nach Anspruch 5, wobei das Niveau des Kühlmittels innerhalb des Kühlmittelreservoirs (29) auf oder unter dem Schwellenniveau (32) liegt.

7. Kernkraftwerk (10) nach einem der vorangegangenen Ansprüche, wobei das Kühlmittelreservoir (29) innerhalb eines Reaktorsicherheitsbehälters (24) angeordnet ist.

8. Kernkraftwerk (10) nach einem der vorangegangenen Ansprüche, wobei das Kühlmittelreservoir (29) den Dampfgenerator (16) umfangsmäßig umgibt.

9. Kernkraftwerk (10) nach einem der vorangegangenen Ansprüche, wobei der Kühlmittelbehälter (29) mit einem Ventil (36) bereitgestellt ist, das betätigbar ist, um Fluidkommunikation zwischen dem Kühlmittelreservoir (29) und dessen Außenbereich bereitzustellen.

10. Kernkraftwerk (10) nach einem der vorangegangenen Ansprüche, ferner umfassend ein Druckauslassventil (30), das betätigbar ist, um den Druck innerhalb des Dampfgenerators (16) zu verringern.

11. Kernkraftwerk (10) nach Anspruch 10, wobei das Druckauslassventil (30) betätigbar ist, um Dampf zu einer sekundären Stelle zu leiten.

12. Kernkraftwerk (10) nach einem der vorangegangenen Ansprüche, ferner umfassend eine Zuleitung (38), die zwischen dem Kühlmittelreservoir (29) und dem Dampfgenerator (16) bereitgestellt ist,
wobei die Zuleitung (38) mit einem Ventil (34) bereitgestellt ist, das betätigbar ist, um Fluidkommunikation zwischen dem Kühlmittelreservoir (29) und dem Dampfgenerator (16) zu ermöglichen, und ausgelegt ist, um unter normalen Bedingungen geschlossen und in Notsituationen geöffnet zu sein; und
wobei der Dampfgenerator (16) und das Kühlmittelreservoir (29) weiters so ausgelegt sind, dass zumindest ein Teil des Kühlmittelreservoirs (29) unter dem Schwellenniveau (32) liegt.

13. Verfahren zum Betreiben eines Kernkraftwerks (10) nach einem der vorangegangenen Ansprüche, wobei das Verfahren das Zuführen von Kühlmittel von dem Kühlmittelreservoir (29) zu dem Dampfgenerator (16) unter Schwerkraft umfasst, wobei das Kühlmittel unter dem von der Dampftrocknungszone (26) definierten Schwellenniveau (32) bleibt.

14. Verfahren nach Anspruch 13, ferner umfassend das Öffnen eines Ventils (36), um Fluidkommunikation zwischen dem Kühlmittelreservoir (29) und dessen Außenbereich bereitzustellen.

15. Verfahren nach Anspruch 13 oder 14, ferner umfassend das Öffnen eines Druckauslassventils (30), um den Druck innerhalb des Dampfgenerators (16) zu verringern.

16. Verfahren nach Anspruch 15, wobei durch das Öffnen des Druckauslassventils (30) Dampf zu einer sekundären Stelle geleitet wird.

## Revendications

1. Centrale nucléaire (10), comprenant :
une cuve de réacteur (11) ;
un générateur de vapeur (16) prévu pour générer de la vapeur à l'aide de l'énergie thermique générée dans la cuve de réacteur (11) ;
un circuit hydraulique (14) destiné à transférer l'énergie thermique de la cuve de réacteur (11) vers le générateur de vapeur (16) ; et
un réservoir de liquide de refroidissement (29) adapté pour stocker un liquide de refroidissement destiné à être fourni au générateur de vapeur (16) par gravité dans des conditions d'urgence ;
dans laquelle le générateur de vapeur (16) comprend une zone de séchage de vapeur (26) comprenant un ou plusieurs séparateur(s) de vapeur (28) configuré(s) pour sécher la vapeur ; et
dans laquelle le générateur de vapeur (16) et le réservoir de liquide de refroidissement (29) sont configurés de sorte que, lorsque du liquide de refroidissement est fourni par le réservoir de liquide de refroidissement (29) au générateur de vapeur (16) dans des conditions d'urgence, le liquide de refroidissement reste sous un niveau de seuil (32) défini par la zone de séchage de vapeur (26).

2. Centrale nucléaire (10) selon la revendication 1, dans laquelle le niveau de seuil est défini de sorte que, à condition que le liquide de refroidissement reste sous le niveau de seuil, le ou chaque séparateur de vapeur fonctionne afin de sécher la vapeur dans le générateur de vapeur.

3. Centrale nucléaire (10) selon la revendication 1 ou 2, dans laquelle le niveau de seuil (32) est défini par une limite inférieure de la zone de séchage de vapeur (26).

4. Centrale nucléaire (10) selon l'une quelconque des revendications précédentes, dans laquelle le ou chaque séparateur de vapeur (28) se trouve au moins partiellement dans la zone de séchage de vapeur (26).

5. Centrale nucléaire (10) selon l'une quelconque des revendications précédentes, dans laquelle le réservoir de liquide de refroidissement (29) est adapté pour contenir du liquide de refroidissement.

6. Centrale nucléaire (10) selon la revendication 5, dans laquelle le niveau du liquide de refroidissement dans le réservoir de liquide de refroidissement (29) est identique ou inférieur au niveau de seuil (32).

7. Centrale nucléaire (10) selon l'une quelconque des revendications précédentes, dans laquelle le réservoir de liquide de refroidissement (29) se trouve à l'intérieur d'une enceinte de réacteur (24).

8. Centrale nucléaire (10) selon l'une quelconque des revendications précédentes, dans laquelle le réservoir de liquide de refroidissement (29) entoure circonférentiellement le générateur de vapeur (16).

9. Centrale nucléaire (10) selon l'une quelconque des revendications précédentes, dans laquelle le réservoir de liquide de refroidissement (29) est équipé d'une soupape (36) capable d'assurer une communication de fluide entre le réservoir de liquide de refroidissement (29) et l'extérieur de celui-ci.

10. Centrale nucléaire (10) selon l'une quelconque des revendications précédentes, comprenant en outre une soupape de dépressurisation (30) capable de réduire la pression dans le générateur de vapeur (16).

11. Centrale nucléaire (10) selon la revendication 10, dans laquelle la soupape de dépressurisation (30) est capable d'acheminer la vapeur vers un emplacement subsidiaire.

12. Centrale nucléaire (10) selon l'une quelconque des revendications précédentes, comprenant en outre un conduit d'alimentation (38) prévu entre le réservoir de liquide de refroidissement (29) et le générateur de vapeur (16), dans laquelle :
le conduit d'alimentation (38) est équipé d'une soupape (34) capable de permettre une communication de fluide entre le réservoir de liquide de refroidissement (29) et le générateur de vapeur (16) et configurée pour être fermée pendant des conditions normales et ouvertes dans des conditions d'urgence ; et
le générateur de vapeur (16) et le réservoir de liquide de refroidissement (29) sont en outre configurés de sorte qu'au moins une partie du réservoir de liquide de refroidissement (29) se trouve sous le niveau de seuil (32).

13. Procédé de fonctionnement d'une centrale nucléaire (10) selon l'une quelconque des revendications précédentes, le procédé comprenant la fourniture de liquide de refroidissement par le réservoir de liquide de refroidissement (29) au générateur de vapeur (16) par gravité, le liquide de refroidissement restant sous le niveau de seuil (32) défini par la zone de séchage de vapeur (26).

14. Procédé selon la revendication 13, comprenant en outre l'ouverture d'une soupape (36) de façon à assurer une communication de fluide entre le réservoir de liquide de refroidissement (29) et l'extérieur de celui-ci.

15. Procédé selon la revendication 13 ou 14, comprenant en outre l'ouverture d'une soupape de dépressurisation (30) de façon à réduire la pression dans le générateur de vapeur (16).

16. Procédé selon la revendication 15, dans lequel l'ouverture de la soupape de dépressurisation (30) achemine la vapeur vers un emplacement subsidiaire.
